**Europäisches Patentamt**

(19) **European Patent Office**

**Office européen des brevets**

(11) Numéro de publication: **0 053 051**
**B1**

(12) **FASCICULE DE BREVET EUROPEEN**

(45) Date de publication du fascicule du brevet:
16.01.85

(51) Int. Cl.⁴: **H 04 L 27/18, H 04 L 27/00**

(21) Numéro de dépôt: **81401635.8**

(22) Date de dépôt: **16.10.81**

(54) **Procédé de transmission des signaux d'exploitation d'un faisceau Hertzien numérique, émetteur et récepteur pour la mise en oeuvre d'un tel procédé.**

(30) Priorité: **21.11.80 FR 8024802**

(43) Date de publication de la demande:
**02.06.82 Bulletin 82/22**

(45) Mention de la délivrance du brevet:
**16.01.85 Bulletin 85/3**

(84) Etats contractants désignés:
**DE GB IT**

(56) Documents cités:
**ELECTRONICS, vol. 43, no. 11, mai 1970 New York, US**
**"On the air with microwave PCM", page 91**
**IEEE TRANSACTION ON COMMUNICATIONS vol. COM-27, no. 12, décembre 1979 New York, US THOMAS et al.: "A New Generation of Digital Microwave Radios for U.S. Military Telephone Networks", pages 1916-1927**
**"Câbles et Transmission", no spécial, octobre 1976, pages 552 à 571**

(73) Titulaire: **THOMSON-CSF, 173, Boulevard Haussmann, F-75379 Paris Cedex 08 (FR)**

(72) Inventeur: **Huriau, Alain, THOMSON-CSF SCPI 173, bld Haussmann, F-75360 Paris Cedex 08 (FR)**

(74) Mandataire: **Turlèque, Clotilde et al, THOMSON-CSF SCPI 173, Bld Haussmann, F-75379 Paris Cedex 08 (FR)**

ACTORUM AG

# Description

La présente invention se rapporte aux procédés de transmission des signaux d'exploitation d'un faisceau hertzien numérique. Elle concerne également les émetteurs et les récepteurs qui permettent de mettre en œuvre un tel procédé dans ces faisceaux hertziens.

Pour exploiter un faisceau hertzien, il est nécessaire de transmettre sur ce faisceau lui-même non seulement les signaux tels que la parole, auquel il est destiné, mais encore un certain nombre de signaux annexes tels que des voies de service ou de télésurveillance. Ces signaux annexes sont couramment appelés signaux d'exploitation.

Lorsque la modulation transmise par les faisceaux hertziens était analogique, ces signaux d'exploitation se présentaient le plus souvent sous la forme de tonalités elles-mêmes analogiques.

Dans les faisceaux hertziens dits numériques, où l'on module directement la porteuse selon un certain nombre d'états sélectionnés de manière numérique à partir de signaux d'entrée eux-mêmes numériques et pouvant représenter aussi bien des données que de la parole, il est à la fois plus simple et plus intéressant d'utiliser ces signaux d'exploitation sous la forme de signaux numériques.

Pour transmettre ces signaux d'exploitation, on peut tout d'abord les multiplexer avec le signal principal à transmettre, puis transmettre la trame ainsi obtenue et la démultiplexer à la réception pour séparer les signaux d'exploitation ainsi transmis. Ceci présente l'inconvénient d'augmenter le debit du faisceau hertzien, et de nécessiter l'emploi à l'emission d'un multiplexeur et à la réception d'un démultiplexeur, qui sont des organes coûteux et encombrants.

On sait également transmettre ces signaux d'exploitation sans augmenter le débit en superposant une modulation analogique, qui peut être de phase, de fréquence, ou d'amplitude, à la modulation principale apportée par le train de signaux numériques. Pour qu'une telle superposition de modulation ne perturbe pas la transmission principale, il faut se limiter à une capacité de signaux d'exploitation relativement faible.

Un tel dispositif est décrit dans l'article intitulé «Le FH 664N, faisceau hertzien numerique» de B. Druais, Y. Delcourte et A. Huriau pages 552 et 571 publié dans la revue «Câbles et Transmission» n° spécial , octobre 1976, édité par SOTELEC 16, rue de la Baume, 75008 Paris.

Pour transmettre ces signaux avec un débit assez important sans trop modifier le spectre d'émission, et sans utiliser trop de matériel, l'invention propose un procédé de transmission des signaux d'exploitation d'un faisceau hertzien numérique, du type selon lequel les mots de donnée de m eb (m entier supérieur a 1, autres que ceux d'exploitation, appliqués à l'entrée du faisceau sont transmit en modulant une porteuse selon $n=2^m$ états, caractérisé en ce que l'on transmet les signaux d'exploitation eb par eb ou moyen d'un n plus unième état de la porteuse pouvant être émis à la place de l'état correspondant à un mot de donnée lorsque celui-ci est identique au précédent.

D'autres particularités et avantages de l'invention apparaîtront clairement dans la description suivante présentée à titre d'exemple non limitatif et faite en regard des figures annexées suivantes:
— la figure 1, qui représente un ordinogramme de l'émission des signaux;
— la figure 2, qui représente le schéma d'un émetteur/récepteur de faisceau hertzien;
— la figure 3, qui représente un ordinogramme de la réception des signaux.

Dans un faisceau hertzien numérique, le signal à transmettre se présente sous la forme d'une série de mots numériques formés chacun de m éléments binaires, dont l'abréviation est le terme eb. Ces mots servent à sélectionner dans les circuits de l'émetteur du faisceau hertzien les états de la porteuse à l'émission. Ces états sont au nombre de $n=2^m$. C'est ainsi que pour des mots de trois eb, on peut avoir une porteuse présentant huit états de phase espacés de 45°.

Lorsque le signal à transmettre est formé d'une serie de mots de même valeur, la phase de la porteuse reste constante. On peut alors considérer que dans ce cas le canal de transmission est inactif puisque l'on répète la même information.

Selon l'invention, on transmet à ces instants les signaux d'exploitation en utilisant un état supplémentaire de la porteuse et un codage tel qu'il y ait une prédiction de la répétition du mot du signal principal. Dans ces conditions le débit en ligne n'est pas augmenté car ceci revient à substituer à un eb principal un eb auxiliaire. Par contre le nombre d'états significatifs de la porteuse est augmenté de une unité.

La qualité de la transmission des signaux d'exploitation n'a pas besoin d'être nécessairement aussi bonne que celle des signaux principaux. On peut alors choisir l'état supplémentaire de la porteuse de manière à modifier très peu les caractéristiques du signal émis et à faciliter tant la modulation que la démodulation au prix d'une sureté un peu plus faible de la transmission des signaux d'exploitation.

Tous les systèmes de modulation reviennent à répartir régulièrement dans le plan de phase les points représentatifs des états de la porteuse. C'est ainsi que dans une modulation purement de phase ces points représentatifs sont régulièrement répartis sur un cercle centré sur l'origine des axes, et que dans le cas d'une modulation par états, qui correspond en fait à la superposition d'une modulation d'amplitude et d'une modulation de phase, ils sont répartis sur un quadrillage lui-même centré sur l'origine des axes. Dans tous ces cas on n'utilise généralement pas l'état zéro, qui correspond à l'origine des axes, parce que celui-ci correspond à une suppression de la porteuse qui augmente l'incidence des signaux parasites et donc les risques de faux décodages.

Une bonne solution pour le choix de l'état supplémentaire pour la transmission des signaux d'exploitation, consiste justement à utiliser cet état zéro qui est plus sensible aux parasites, mais perturbe très peu la transmission.

Si donc un mot à transmettre $M_{t+1}$ est identique au mot $M_t$ correspondant à l'instant significatif précédent, l'état de la porteuse à transmettre sera alors normalement $\Phi_{t+1} = \Phi_t$. Pour pouvoir alors transmettre pendant cet intervalle significatif $t+1$ la valeur de l'eb du signal d'exploitation, on choisira un codage qui consistera par exemple à transmettre l'état $\Phi_0$ de la porteuse si cet eb a pour valeur 1, et l'état $\Phi_t$ si cet eb à la valeur zéro.

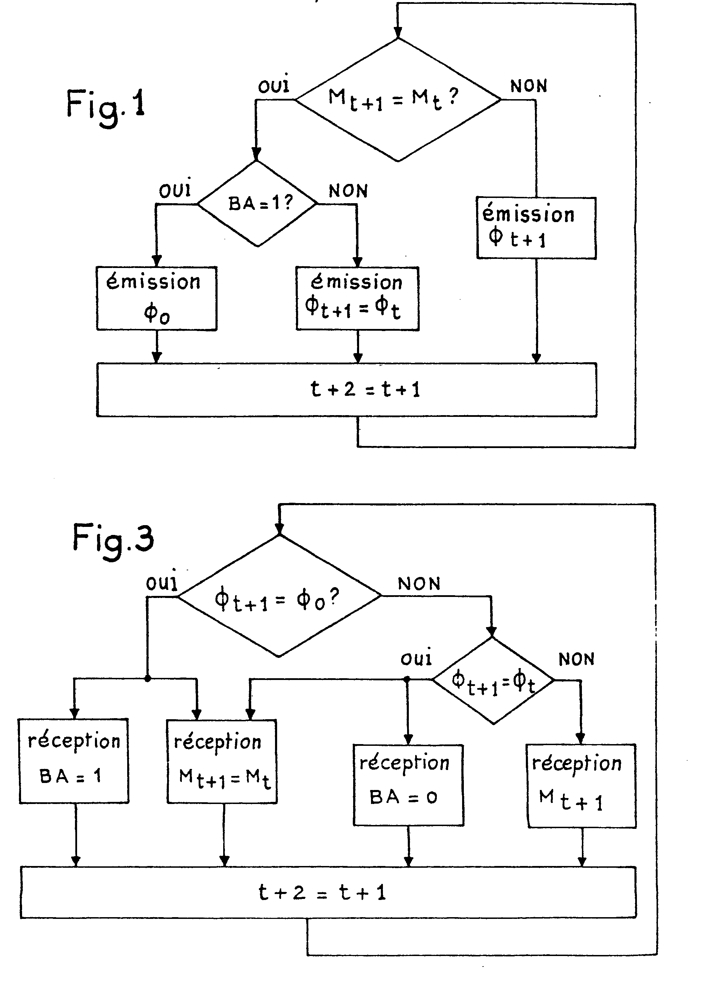

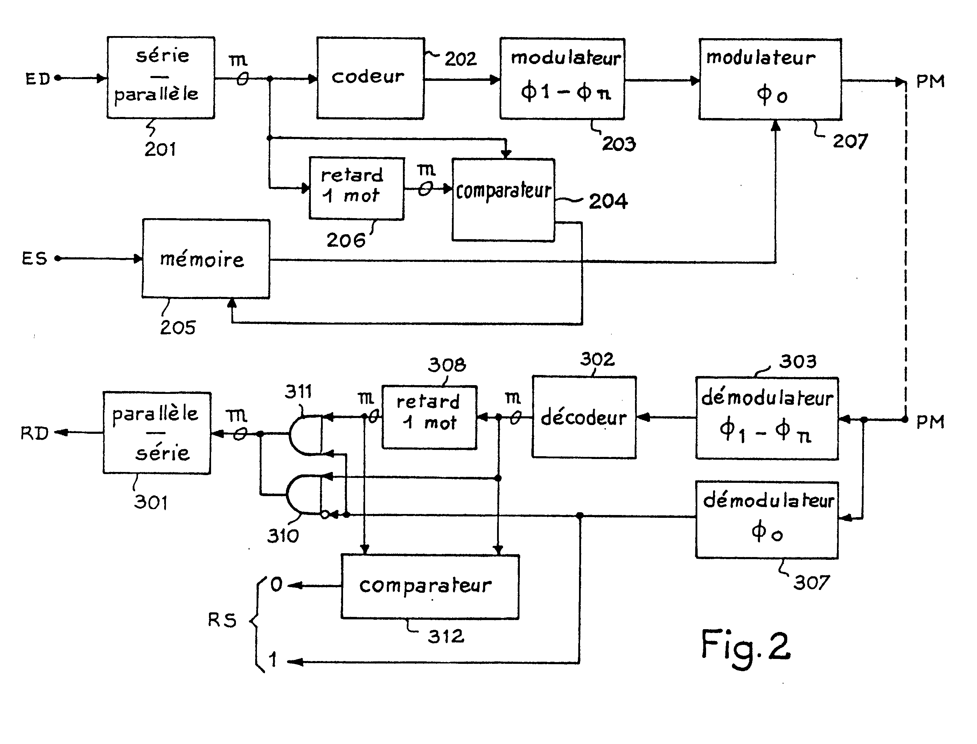

Ce procédé de codage est représenté par l'ordinogramme de la figure 1.

Dans cet ordinogramme on part d'une étape de test sur la veleur du mot $M_{t+1}$. Si ce mot n'est pas égal à $M_t$, on passe à une étape d'emission de la porteuse avec la phase $\Phi_{t+1}$. On termine alors la séquence par le passage à l'instant significatif suivant où l'on fait $t+2 = t+1$, et il y a retour au départ.

Si par contre $M_{t+1}$ est égal à $M_t$, on passe à une deuxième séquence de test sur la valeur de l'eb d'exploitation BA. Si BA est égal à 1, on passe à une étape d'emission de la porteuse avec la phase $\Phi_0$ puis à l'étape de fin.

Si BA n'est pas égal à 1 on passe à l'étape d'émission de la porteuse avec la phase $\Phi_{t+1}$, qui dans ce cas est égale à la phase $\Phi_t$, et ensuite à l'étape de fin.

Le schéma de l'émetteur permettant de mettre en œuvre cette méthode est représenté sur la partie haute de la figure 2.

Les données numérique à transmettre se présentent sous la forme d'un signal binaire série ED. Ce signal est appliqué à un convertisseur série-parallèle 201 qui permet d'obtenir à sa sortie les mots $M_t$ formés de m eb. Ces mots sont tout d'abord appliqués à un codeur différentiel 202 qui permet de délivrer les signaux de commande d'un modulateur 203.

Ce modulateur délivre sous la commande de ces signaux une porteuse modulée en phase selon un ensemble de n états de phase distincts $\Phi_1$ à $\Phi_n$; n étant égal à $2^m$.

Les mots M en sortie du convertisseur 201 sont également appliqués à des moyens de comparaison qui comparent chaque mot $M_{t+1}$ au mot $M_t$ précédent. Ces moyens de comparaison comprennent par exemple un circuit de retard 206 qui retarde chaque mot d'une durée égale à un intervalle significatif, et un comparateur 204 qui reçoit le mot ainsi retardé et celui provenant directement du convertisseur 201. Sie ces mots sont égaux, le comparateur 204 délivre sur sa sortie un «1» logique. Le signal binaire d'exploitation ES est appliqué à une mémoire 205 du type connu sous le nom de FIFO, qui permet de conserver les eb de ce signal entre les instants où il n'est pas possible de les transmettre parce que le signal ED ne le permet pas.

Le «1» logique en sortie du comparateur 204 est appliqué à cette mémoire 205. Il libère alors un eb de celle-ci lorsque donc le signal ED permet la transmission.

La sortie de cette mémoire est reliée à l'entrée de modulation d'un deuxième modulateur 207 qui reçoit d'autre part la porteuse modulée provenant du modulateur 203. Ce modulateur permet de moduler cette porteuse par la phase $\Phi_0$ si l'eb en sortie de la mémoire 205 est un «1» logique. Dans ce cas la transmission de la porteuse est purement et simplement interrompue. Ce modulateur fonctionne donc comme un simple interrupteur.

Si par contre cet eb fourni par la mémoire 205 est un «0» logique, la porteuse sortant du modulateur 203 est purement et simplement transmise.

On obtient ainsi la porteuse PM qui est émise vers le récepteur.

Le décodage des signaux à la réception s'effectue selon l'ordinogramme représenté sur la figure 3.

On part d'une première étape de test qui consiste à vérifier si la phase du signal reçu à l'instant $t+1$, soit $\Phi_{t+1}$, est égale à $\Phi_0$. Si c'est le cas on passe ensuite à deux étapes simultanées où l'on valide d'une part la réception d'un eb auxiliaire BA qui est égal à 1, et où d'autre part on valide la réception d'un mot $M_{t+1}$, qui est égal à $M_t$. Après ces deux étapes simultanées, on passe à une étape de fin où l'instant significatif suivant $t+2$ devient l'instant $t+1$, ce qui permet de repartir au départ de l'ordinogramme.

Si $\Phi_{t+1}$ n'est pas égal à $\Phi_0$ on passe alors dans une deuxième étape de test où l'on vérifie si $\Phi_{t+1}$ est égal à $\Phi_0$.

Si c'est le cas on passe alors dans deux étapes simultanées, dont l'une correspond à la réception d'un mot $M_{t+1}$ qui est égal au mot précédent $M_t$. Cette étape est commune à l'une de la branche précédente. L'autre étape correspond à la réception d'un eb auxiliaire BA qui est égal à 0.

Si $\Phi_{t+1}$ est différent de $\Phi_t$, on passe à une étape unique correspondant à la réception d'un mot $M_{t+1}$ déterminé par la phase $\Phi_{t+1}$.

Dans les deux cas on passe à l'étape de fin qui permet de repartir au départ.

Le récepteur du faisceau hertzien qui permet de recevoir cette modulation est représenté en partie basse sur la figure 2.

La porteuse modulée PM émise par l'émetteur est reçue dans le récepteur sur deux démodulateurs.

Un premier démodulateur 303 de type standard permet de délivrer un signal pouvant prendre huit états selon que la phase de la porteuse reçue présente l'une des huit phase 1 à n. Ce signal est émis vers un décodeur 302 qui reconstitue des mots de m bits en parallèle. Ces mots sont transmis directement par un porte «ET» multiple 310 si l'état $\Phi_0$ n'a pas été reçu.

Les mots en sortie du décodeur 302 sont également appliqué à un dispositif de retard 308, formé par exemple d'un registre parallèle à un étage, et qui permet de les retarder d'un intervalle significatif. On dispose à la sortie de ce dispositif de retard 308 du mot précédemment transmis. Si alors l'état $\Phi_0$ a été transmis, indiquant que le mot transmis est le même que le mot précédent, ce précédent retardé est transmis par l'intermédiaire d'une deuxième porte «ET» 311 dont la sortie est en parallèle avec celle de la porte 310.

Ces deux sorties en parallèle sont alors appliquées à un convertisseur parallèle-série 301 qui permet de délivrer le signal de donnée reçu en mode série. Ce signal RD est donc identique, aux erreurs éventuelles de transmission près, au signal émis ED.

La porteuse modulée PM reçue est également appliquée à un démodulateur 307 qui permet de détecter l'état $\Phi_0$. Comme cet état dans l'exemple décrit est simplement composé d'une absence de la porteuse, un simple détecteur, muni par exemple d'un circuit à seuil permettant de déterminer la chute du niveau du signal reçu en dessous d'une valeur déterminée, permet de délivrer un signal logique qui indique l'apparition de cet état $\Phi_0$ dans le signal reçu.

Le signal en sortie de ce démodulateur 307 est d'une part appliqué à la porte 310 sur une entrée inverseuse, ce qui permet d'ouvrir celle-ci lorsque l'état $\Phi_0$ n'est pas reçu et de la fermer dans le cas inverse.

Il est également appliqué à une entrée directe de la porte 311, ce qui permet, à l'inverse de la porte 310, de la maintenir fermée lorsque l'état $\Phi_0$ n'est pas reçu mais pas contre de l'ouvrir lorsqu'on décèle la présence de cet état. Ceci permet comme on l'a vu plus haut de laisser passer le mot direct ou le mot retardé lorsque ce dernier est le même que le mot direct et que l'on a reçu $\Phi_0$.

Pour obtenir le signal numérique de servitude, on utilise pour les états 1 directement la sortie du démodulateur 307, puisque la transmission de l'état $\Phi_0$ indique justement la transmission d'un eb de servitude de valeur 1.

Quand par contre l'état $\Phi_0$ n'est pas transmis, on ne peut pas interpréter l'absence de signal en sortie du démodulateur 307 comme la transmission d'un eb de service de valeur 0.

Le test de cette transmission se fait comme on l'a vu plus haut sur la transmission de deux mots de donnée successifs de même valeur obtenus par la transmission successive de deux états identiques choisis entre $\Phi_1$ et $\Phi_n$.

Pour déterminer cela on applique à un comparateur multiple 312 l'entrée et la sortie du dispositif de retard 308. Ainsi si les mots transmis à deux instants significatifs successifs sont les mêmes, le comparateur détectera cette identité et émettra sur sa sortie un eb qui pourra être par exemple 0, étant bien entendu que l'état 1 de repos du comparateur ne signifira pas la transmission d'un eb de service 1.

On voit donc que pour obtenir les eb de service, il faut au moins deux sorties distinctes, l'une pour les eb 1, l'autre pour les eb 0, parce que la transmission ne se fait pas en permanence. Les circuits de servitude fonctionnant à partir de ces eb interpréteront les signaux présents sur ces deux sorties. On pourrait aussi reconstituer un train binaire série formé de 1 et de 0 pour les eb de servitude à l'intérieur du récepteur proprement dit, de façon à disposer de ces eb sur une seule sortie. Mais il faudrait alors une autre sortie comportant un signal de validation pour distinguer l'absence de signal sur la première sortie de la transmission d'un eb 0. On aurait alors toujours deux sorties.

Une autre solution pourrait enfin consister à mettre en mémoire les eb de service reçus, et à les transmettre ensuite de manière asynchrone avec un en-tête lorsqu'on en aurait un nombre suffisant.

Pour savoir quel est le débit maximal des eb de service disponible, il faut se placer dans le cas où le signal de donnée est aléatoire. C'est d'ailleurs le cas général puisque l'on utilise la plus souvent un brouilleur à l'emission et un débrouilleur à la réception afin de minimiser le risque d'erreur, conformément à la théorie de l'information, et d'avoir un nombre suffisant de transitions dans le signal.

Dans ce cas, en partant d'un débit principal de 140 méga eb par seconde, et pour un modulateur à huit phases, le calcul probabiliste montre que le débit auxiliaire peut atteindre 2,2 méga eb par seconde.

On ne peut toutefois pas se permettre de monter à ce débit pour les eb de service, puisqu'ils apparaissent de manière continue alors que la probabilité de transmission due à la présence de deux mots consécutifs identiques est aléatoire. Pour ne pas perdre trop de mots, on peut utiliser par exemple un système de suréchantillonnage, qui consiste à retransmettre en moyenne plusieurs fois le même eb auxiliaire.

En reprenant l'exemple numérique vu plus haut, si l'on désire avoir un débit auxiliaire égal à 300 kilobits par seconde, ce qui représente un suréchantillonnage de 7,3 fois, le calcul de probabilité montre que le risque de perte d'un eb auxiliaire, et donc de déverrouillage des circuits auxiliaires, aura une valeur de $10^{-34}$, ce qui est très faible et parfaitement acceptable.

## Revendications

1. Procédé de transmission des signaux d'exploitation d'un faisceau hertzien numérique, du type selon lequel les mots de données de m eb (m entier supérieur à 1), autres que ceux d'exploitation, appliqués à l'entrée du faisceau sont transmis en modulant une porteuse selon $n=2^m$ états, caractérisé en ce que l'on transmet les signaux d'exploitation eb par eb au moyen d'un n plus unième état de la porteuse pouvant être émis à la place de l'état correspondant à un mot de données lorsque celui-ci est identique au précédent.

2. Procédé selon la revendication 1, caractérisé en ce que pour différencier les deux valeurs de l'eb de service à transmettre, on utilise le n plus unième état pour coder l'une de ces valeurs, et l'état correspondant au mot de donnée remplacé par l'eb de service pour coder l'autre valeur.

3. Procédé selon l'une quelconque des revendications 1 ou 2, caractérisé en ce que le n plus unièment état est un état dit 0 correspondant à la suppression de la porteuse.

4. Emetteur de faisceau hertzien pour la mise en œuvre du procédé selon l'une quelconque des revendications 1 à 2, du type comprenant:

— des moyens de conversion série-parallèle (201) pour recevoir un signal numérique série de donnée à émettre et le convertir en une suite de mots de m eb en parallèle;

— un codeur (202) pour élaborer un premier signal de commande à partir de ces mots;

— un premier modulateur (203) pour délivrer une porteuse modulée selon $n=2^m$ états sous l'action du premier signal de commande;
caractérisé en ce qu'il comprend en outre:

— des moyens (204, 206) pour comparer chaque mot au mot précédent et délivrer un deuxième signal de commande lorsque ces deux mots sont identiques;

— une mémoire du type FIFO (205) pour recevoir un signal numérique série de service à émettre et le délivrer eb par eb sous l'action du deuxième signal de commande; et

— un deuxième modulateur (207) pour recevoir la porteuse modulée par le premier modulateur et la moduler selon un n plus unième état sous l'action de l'eb délivré par la mémoire.

5. Emetteur selon la revendication 4, caractérisé en ce que le deuxième modulateur (207) fonctionne par suppression de la porteuse lorsque l'eb délivré par la mémoire (205) a la valeur 1.

6. Emetteur selon l'une quelconque des revendications 4 et 5, caractérisé en ce que le premier modulateur (203) est un modulateur de phase.

7. Récepteur de faisceau hertzien pour la mise en œuvre du procédé selon l'une quelconque des revendications 1 à 3, du type comprenant:

— un premier démodulateur (303) pour recevoir une porteuse modulée selon $n+1$ ($n=2^m$) états et émettre un premier signal de démodulation correspondant à la démodulation de n de ces états;

— un décodeur (302) pour former à partir de ce premier signal de démodulation des mots de m eb en parallèle;

— des moyens de conversion série-parallèle (301) pour recevoir ces mots et les convertir en un signal numérique série de donnée reçu;
caractérisé en ce qu'il comprend en outre:

— un deuxième démodulateur (307) pour recevoir ladite porteuse modulée et émettre un deuxième signal de démodulation correspondant à la démodulation du n+unième état;

— des moyens (308) pour retarder chaque mot émis par le décodeur et le délivrer en synchronisme avec le mot suivant;

— des moyens (310–311) pour recevoir simultanément ce mot retardé et le mot suivant et délivrer le mot retardé sous l'action du deuxième signal de démodulation, ou le mot suivant lorsque ce deuxième signal de démodulation est absent; et

— des moyens (312) pour comparer le mot retardé et le mot suivant et délivrer lorsque ces deux mots sont identiques un eb de service reçu selon un état déterminé; le deuxième signal de commande marquant ces eb de service reçu selon son autre état déterminé.

8. Récepteur selon la revendication 7, caractérisé en ce que le deuxième démodulateur comprend un circuit à seuil détectant la disparition de la porteuse modulée.

## Patentansprüche

1. Verfahren zur Übertragung von Betriebssignalen einer digitalen Richtfunkstrecke, bei welchem die nicht zu den Betriebssignalen gehörenden Datenwörter zu m Binäreinheiten (m ganzzahlig grösser als 1) an den Eingang der Richtfunkstrecke angelegt und durch Modulation einer Trägerschwingung mit $n=2^m$ Zuständen übertragen werden, dadurch gekennzeichnet, dass die Betriebssignale Binäreinheit für Binäreinheit mittels eines n+1ten Zustandes der Trägerschwingung übertragen werden, der anstelle des einem Datenwort entsprechenden Zustandes, wenn dieses mit dem vorhergehenden identisch ist, übertragen werden kann.

2. Verfahren nach Anspruch 1, dadurch gekennzeichnet, dass zur Differenzierung zwischen den beiden Werten der zu übertragenden Betriebs-Binäreinheit für die Codierung eines dieser Werte der n+1te Zustand und für die Codierung des anderen Wertes derjenige Zustand verwendet wird, welcher dem durch die Betriebs-Binäreinheit ersetzten Datenwort entspricht.

3. Verfahren nach Anspruch 1 oder 2, dadurch gekennzeichnet, dass der n+1te Zustand ein sogenannter Zustand Null ist, welcher der Unterdrückung der Trägerschwingung entspricht.

4. Sender einer Richtfunkstrecke zur Durchführung des Verfahrens nach einem der Ansprüche 1 bis 3, enthaltend:

— Serien/Parallel-Umsetzmittel (201) zum Empfangen eines seriellen digitalen auszusendenden Datensignals und zur Umsetzung desselben in eine Folge von parallelen Wörtern zu m Binäreinheiten;

— einen Codierer (202) zur Erzeugung eines ersten Steuersignals aus diesen Wörtern;

— einen ersten Modulator (203) zur Erzeugung einer mit $n=2^m$ modulierten Trägerschwingung unter der Wirkung des ersten Steuersignals;
dadurch gekennzeichnet, dass er ferner enthält:

— Mittel (204, 206) zum Vergleichen jedes Wortes mit dem vorausgehenden Wort und Abgeben eines zweiten Steuersignals, wenn diese Wörter gleich sind;

— einen Speicher vom FIFO-Typ (205) zum Empfangen eines seriellen digitalen auszusendenden Betriebssignals und zum Ausgeben desselben Binäreinheit pro Binäreinheit unter der Wirkung des zweiten Steuersignals; und

— einen zweiten Modulator (207) zum Empfangen der durch den ersten Modulator modulierten Trägerschwingung und Modulieren derselben mit einem n+1ten Zustand unter der Wirkung der von dem Speicher abgegebenen Binäreinheit.

5. Sender nach Anspruch 4, dadurch gekennzeichnet, dass der zweite Modulator (207) die Trägerschwingung unterdrückt, wenn die von dem Speicher (205) ausgegebene Binäreinheit den Wert 1 hat.

6. Sender nach einem der Ansprüche 4 oder 5, dadurch gekennzeichnet, dass der erste Modulator (203) ein Phasenmodulator ist.

7. Empfänger einer Richtfunkstrecke für die Durchführung des Verfahrens nach einem der Ansprüche 1 bis 3, enthaltend:

– einen ersten Demodulator (303) zum Empfangen einer mit n+1 (n=2$^m$) Zuständen modulierten Trägerschwingung und Ausgeben eines ersten Demodulationssignals, welches der Demodulation von n dieser Zustände entspricht;

– einen Decoder (302) zur Bildung der parallelen Wörter zu m Binäreinheiten aus diesem ersten Demodulationssignal;

– Serien/Parallel-Umsetzmittel (301) zum Empfangen dieser Wörter und Umsetzen derselben in ein serielles empfangenes digitales Datensignal; dadurch gekennzeichnet, dass er ferner enthält:

– einen zweiten Demodulator (307) zum Empfangen der genannten modulierten Trägerschwingung und Abgeben eines zweiten Demodulationssignals, welches der Demodulation des n+1ten Zustands entspricht;

– Mittel (308) zum Verzögern jedes von dem Decoder ausgegebenen Wortes und Abgeben desselben synchron mit dem darauffolgenden Wort;

– Mittel (310–311) zum gleichzeitigen Empfangen dieses verzögerten Wortes und des darauffolgenden Wortes und Ausgeben des verzögerten Wortes unter Wirkung des zweiten Demodulationssignals oder des darauffolgenden Wortes, wenn dieses zweite Demodulationssignal fehlt; und

– Mittel (312) zum Vergleichen des verzögerten Wortes mit dem darauffolgenden Wort und Ausgeben einer mit einem bestimmten Zustand empfangenen Betriebs-Binäreinheit, wenn diese zwei Wörter identisch sind; wobei das zweite Steuersignal diese mit einem anderen bestimmten Zustand empfangene Betriebs-Binäreinheit markiert.

8. Empfänger nach Anspruch 7, dadurch gekennzeichnet, dass der zweite Demodulator eine Schwellwertschaltung umfasst, welche das Verschwinden der modulierten Trägerschwingung feststellt.

**Claims**

1. Method of transmitting the operational signals of a digital microwave link, of the type wherein the data words of m binary elements (m integer and exceeding 1) other than the operational ones and applied to the input of the link are transmitted by modulation of a carrier into n=2$^m$ states, characterized in that the operational signals are transmitted binary element by binary element by means of a n plus 1th state of the carrier adapted to be transmitted in place of the state corresponding to a data word when the latter is identical to the preceding one.

2. Method according to claim 1, characterized in that, in order to differentiate the two values of the operational binary element to be transmitted, the n plus 1th state is used for the coding of one of these values and the the state corresponding to the data word replaced by the operational binary element for coding the other value.

3. Method according to any of claims 1 or 2, characterized in that the n plus 1th state is a socalled 0 state corresponding to the suppression of the carrier.

4. Microwave link transmitter for performing the method according to any of claims 1 to 3, of the type comprising:

– serial-parallel conversion means (201) for receiving a serial digital data signal to be transmitted and for converting the same into a sequence of parallel words of m binary elements;

– a coder (202) for generating a first control signal from these words;

– a first modulator (203) for providing a carrier modulated into n=2$^m$ states by the action of the first control signal; characterized in that it further comprises:

– means (204, 206) for comparing each word to the preceding word and supplying a second control signal when these two words are identical;

– a memory of FIFO type (205) for receiving a serial digital operational signal to be transmitted and for supplying the same binary element by binary element by action of the second control signal; and

– a second modulator (207) for receiving the carrier modulated by the first modulator and for modulating the same into an n plus 1th state by the action of the binary element supplied from the memory.

5. Transmitter according to claim 4, characterized in that the second modulator (207) operates by suppression of the carrier when the binary element supplied from the memory (205) has the value 1.

6. Transmitter according to any of claims 4 and 5, characterized in that the first modulator (203) is a phase modulator.

7. Microwave link receiver for performing the method of any of claims 1 to 3, of the type comprising:

– a first demodulator (303) for receiving a carrier modulated into n+1 (n=2$^m$) states and supplying a first demodulation signal corresponding to the demodulation of n of these states;

– a decoder (302) for forming parallel words of m binary elements from this first modulation signal;

– serial-parallel conversion means (301) for receiving these words and converting them into a received serial digital data signal; characterized in that it further comprises:

– a second demodulator (307) for receiving said modulated carrier and supplying a second demodulation signal corresponding to the demodulation of the n+1th state;

– means (308) for delaying each word supplied from the decoder and providing this word in synchronism with the following word;

– means (310–311) for simultaneously receiving this de delayed word and the following word and supplying the delayed word by the action of the second demodulation signal or the follwing word when this second demodulation signal is missing; and

– means (312) for comparing the delayed word to the following word and, when these two words are identical, supplying an operational binary element received in a determined state; the second control signal marking this operational binary element received in its other determined state.

8. Receiver according to claim 7, characterized in that the second demodulator comprises a threshold circuit detecting the disappearance of the modulated carrier.

0 053 051

1/2

Fig.1

Fig.3

9

Fig. 2